# EUROPEAN PATENT SPECIFICATION

(11) **EP 2 794 696 B1**
(45) Date of publication and mention of the grant of the patent: **04.11.2015**
(21) Application number: 12812936.8
(22) Date of filing: 18.12.2012
(51) Int. Cl.: C08F 214/08, C08L 27/08

(54) **PROCESS FOR THE PREPARATION OF A VINYLIDENE CHLORIDE POLYMER/CLAY COMPOSITE**
VERFAHREN FÜR DIE HERSTELLUNG EINES VINYLIDEN-CHLORID-POLYMER/LEHM-VERBUNDSTOFFS
PROCÉDÉ POUR LA PRÉPARATION D'UN COMPOSITE DE POLYMÈRE DE CHLORURE DE VINYLIDÈNE/ARGILE

(30) Priority: 21.12.2011 EP 11306730
(43) Date of publication of application: 29.10.2014
(73) Proprietor: SOLVAY SA, 1120 Bruxelles (BE)
(72) Inventor: VINAS, Jérôme, B-1060 Brussels (BE); DUFILS, Pierre-Emmanuel, F-39500 Tavaux (FR); VANDERVEKEN, Yves, B-3001 Heverlee (BE)
(74) Representative: Benvenuti, Federica
(86) International application number: PCT/EP2012/075953
(87) International publication number: WO 2013/092590

(56) References cited:
- EP-A1- 1 801 158
- WO-A1-2004/078785
- WO-A1-2005/028557
- WO-A1-2009/130233
- M. BEIJA, JD MARTY, M.DESTARAC: "RAFT/MADIX polymers for the preparation of polymer inorganic hybrids.", PROGRESS IN POLYMER SCIENCE, vol. 36, 22 January 2011 (2011-01-22), - 22 January 2011 (2011-01-22), pages 845-886, XP002670092,
- SEVERAC R ET AL: "VINYLIDENE CHLORIDE COPOLYMERIZATION WITH METHYL ACRYLATE BY REVERSIBLE ADDITION-FRAGMENTATION CHAIN TRANSFER (RAFT) PROCESS", RAPRA ABSTRACTS, RAPRA TECHNOLOGY LTD., SHREWSBURY, GB, vol. 40, no. 9, 1 September 2003 (2003-09-01), page 39, XP001178507, ISSN: 0033-6750

## Description

This application claims priority to European application No. 11306730.0, filed on 21/12/2011.

### Technical Field

The invention relates to a process for preparing composites comprising a vinylidene chloride polymer and a clay material. The process comprises polymerizing vinylidene chloride at the surface of a clay material under the control of a RAFT/MADIX agent. The invention further relates to the vinylidene chloride polymer composite obtained from the process and to the compositions obtainable therefrom.

### Background Art

Vinylidene chloride polymers are typically prepared by a radical polymerization process; see for instance Ullmann's Encyclopedia of Industrial Chemistry. Poly(vinylidene chloride). Edited by WILEY. Weinheim: Wiley VCH-Verlag, 2005.

Over the past decade, various controlled radical polymerization techniques have been developed. Among these reversible addition fragmentation chain transfer (RAFT) and macromolecular design via inter-exchange of xanthate (MADIX) have provided an advantageous route to so-called living polymerization processes, see for instance PERRIER, S., et al. Macromolecular design via Reversible Addition-Fragmentation Chain Transfer (RAFT)/Xanthates (MADIX) polymerization. J. Polym. Sci.: Part A: Po/ym. Chem.. 2005, vol.43, p.5347-5393.

The use of RAFT/MADIX controlled radical polymerization agents, hereinafter referred to as "RAFT/MADIX agents", has been disclosed for instance WO 98/058974 A (RHODIA CHIMIE) 30.12.1998 and WO 98/01478 A (E.I. DUPONT DE NEMOURS AND COMMONWEALTH SCIENTIFIC AND INDUSTRIAL RESEARCH ORGANIZATION) 15.01.1998 1998.

The use of a RAFT agent in the preparation of polymer encapsulated solid particulates has been disclosed for instance in WO 2006/037161 A (THE UNIVERSITY OF SYDNEY) 13.04.2006 which however does not disclose the preparation of composites comprising a vinylidene chloride polymer.

BEIJA, J. D., et al. RAFT/MADIX polymers for the preparation of polymer inorganic nanohybrids. ProgressinPolymerScience. 2011, vol.36, p.845-886. also discloses the preparation of polymer/inorganic nanohybrids using RAFT/MADIX controlled radical polymerization, nanohybrids wherein the polymer is a vinylidene chloride polymer are however not disclosed.

### Summary of invention

Thus a first objective of the present invention is to provide a process for the preparation of a vinylidene chloride polymer composite comprising a clay encapsulated in a vinylidene chloride polymer.

A second objective of the present invention is a vinylidene chloride polymer composite comprising a clay encapsulated in a vinylidene chloride polymer matrix.

A third objective of the present invention is a composition comprising the vinylidene chloride polymer composite, in particular a coating composition.

### Description of invention

According to a first object of the present invention there is provided a
process for preparing a vinylidene chloride polymer composite comprising: providing a dispersion of a clay material in a liquid phase, said dispersion comprising a RAFT/MADIX agent, selected from the group consisting of:
(i) RAFT/MADIX agents of general formula (II): 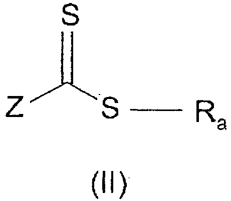 where Rₐ is an organic group optionally substituted with one or more hydrophilic groups and Z is any group that can promote sufficient reactivity of the thiocarbonyl group towards radical addition; and
(ii) RAFT/MADIX agents of general formula (III): 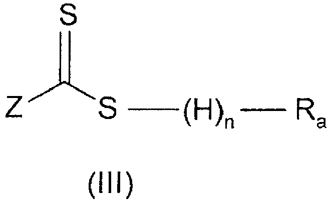 where Z and Rₐ are as defined above; and wherein each H is independently a polymerised residue of an ethylenically unsaturated monomer and n is an integer from 1 to 200;
   - providing vinylidene chloride and optionally at least one ethylenically unsaturated monomer copolymerisable therewith to said dispersion; and
   - polymerising vinylidene chloride and optionally said at least one ethylenically unsaturated monomer under the control of said RAFT/MADIX agent to form vinylidene chloride polymer comprising at least 50 wt% of recurring units deriving from vinylidene chloride at the surface of said clay material.

The expression "vinylidene chloride polymer composite" is used in the present specification to denote a composite comprising a clay encapsulated in the vinylidene chloride polymer. With the phrase "clay encapsulated in the vinylidene chloride polymer" is meant herein that the vinylidene chloride polymer entirely surrounds, homogenously or inhomogeneously, the clay material or that the vinylidene chloride polymer surrounds only in part the clay material.

The clay material may consist of one or several individual solid particles aggregated together at least partially surrounded by a vinylidene chloride layer forming basically the outer surface of the clay material. The thickness of the polymer surrounding the clay material may be relatively constant. However, it may be that the thickness of the encapsulating polymer can vary gradually around the perimeter of the clay material. For example, the clay material may not be located at the precise centre of a spherical polymer coating. The uniformity and continuity of the vinylidene chloride polymer coating surrounding the clay material can generally be visually determined, for example by Transmission Electron Microscopy (TEM).

The thickness of the vinylidene chloride polymer coating which encapsulates the clay material is preferably at least 1 nm, more preferably at least 2 nm, most preferably at least 5 nm, still more preferably at least 10 nm. There is no particular limit as to the thickness of vinylidene chloride polymer that can encapsulate the clay material, with the ultimate thickness generally being dictated by the intended application for the composite.

The clay material can be of any type, shape or size provided that it can be dispersed in the liquid phase.

Clays are naturally occurring phyllosilicates. In general clays are aluminosilicates characterized by sheet like layered structures and consist of tetrahedral silica SiO₄ units bonded to alumina AlO₆ octahedral units in a variety of ways. Other metals such as magnesium may replace aluminum in the crystal structure. Depending on the composition of the clay the sheets or layers carry a charge on the surface and on the edges. This charge is balanced by counter-ions which are located part in the inter-layer spacing of the clay. The thickness of the layers or sheets may be in the order of 1 nm and the aspect ratio range may range from 50 to 1500. Synthetic clays or chemically modified clays are also available. Naturally occurring and synthetic or modified clays can be used in the process of the invention.

Among natural clays mention can be made of smectite clays, for example, bentonite clays, e.g., montmorillonite, hectorite, laponite, saponite, mica, vermiculite, nontronite, beidellite, volkonskoite, kaolinite, serpentinite and saponite.

Among synthetic clays mention may be made of synthetic silicates, synthetic mica, synthetic saponite, and synthetic hectorite. Among modified clays mention may be made of gibbsite, fluorinated montmorillonite and fluorinated mica. Gibbsite may be preferred.

Typically, the average particle size of the clay material, as measured by dynamic light scattering, for instance using the method as described in ISO Norm ISO 22412:2008(E), is advantageously of at least 3 nm, preferably at least 3 nm, more preferably at least 5 nm. The average particle size of the clay material is preferably not greater than 100 microns, typically not greater than 10 microns, and even more typically not greater than 5 microns. Good results have been obtained when the average particle size of the clay material is from 1 to 300 nm, preferably from 5 to 200 nm, more preferably from 10 to 150 nm. An average particle size of the clay material in the range of from 20 to 100 nm has also been found suitable to provide composites with advantageous properties.

The expression "vinylidene chloride polymer" is used herein to indicate a polymer comprising at least 50 wt% of recurring units deriving from vinylidene chloride. Typically, the amount of vinylidene chloride in the vinylidene chloride polymer varies from 50 to 99.5 wt%, preferably from 60 to 98 wt% and more preferably from 65 to 95 wt%.

Non-limiting examples of suitable ethylenically unsaturated monomers copolymerizable with vinylidene chloride that can be used in the process of the present invention, are for instance vinyl chloride, vinyl esters such as for example vinyl acetate, vinyl ethers, acrylic acids, their esters and amides, methacrylic acids, their esters and amides, acrylonitrile, methacrylonitrile, styrene, styrene derivatives, such as styrene sulfonic acid and its salts, vinyl phosphonic acid and its salts, butadiene, olefins such as for example ethylene and propylene, itaconic acid, maleic anhydride, but also copolymerizable emulifiers such as 2-acrylamido-2-methylpropanesulphonic acid (AMPS) or one of its salts, e.g. the sodium salt, 2-sulphoethylmethacrylic acid (2-SEM) or one of its salts, e.g. the sodium salt, and the phosphate ester of methacrylate-terminated polypropylene glycol (such as the product SIPOMER^{®} PAM-200 from Rhodia) or one of its salts, e.g. the sodium salt, poly(ethylene oxide) methyl ether acrylate (PEOAA), poly(ethylene oxide) methyl ether methacrylate (PEOMA).

Preferably, the ethylenically unsaturated monomer copolymerizable with vinylidene chloride used in the process of the invention is selected from the group consisting of vinyl chloride, maleic anhydride, itaconic acid, styrene, styrene derivatives, and the acrylic or methacrylic monomers corresponding to general formula (I):

CH₂ = CR₁R₂ (I)

in which R₁ is chosen from hydrogen and -CH₃ and R₂ is chosen from -CN and -COR₃, wherein R₃ is chosen from -OH, -OR₄, wherein R₄ is a C₁-C₁₈ linear or branched alkyl group optionally bearing one or more -OH groups, a C₂-C₁₀ epoxyalkyl group and a C₂-C₁₀ alkoxyalkyl group and wherein R₃ is also chosen from the -NR₅R₆ radicals in which R₅ and R₆, which are the same or different, are chosen from hydrogen and C₁-C₁₀ alkyl groups, optionally bearing one or more -OH groups, the aforementioned copolymerizable surfactants and the phosphate ester of methacrylate-terminated polypropylene glycol or one of its salts, poly(ethylene oxide) methyl ether acrylate (PEOAA), poly(ethylene oxide) methyl ether methacrylate (PEOMA).

More preferably, the ethylenically unsaturated monomer copolymerizable with vinylidene chloride used in the process of the invention is selected from the group consisting of vinyl chloride, maleic anhydride, itaconic acid, the acrylic or methacrylic monomers selected from the group consisting of methyl acrylate, methyl methacrylate, ethyl acrylate, ethyl methacrylate, n-butyl acrylate, n-butyl methacrylate, 2-ethylhexyl acrylate, 2-ethylhexyl methacrylate, 2-hydroxyethyl acrylate, 2-hydroxyethyl methacrylate, glycidyl methacrylate, glycidyl acrylate, acrylonitrile, methacrylonitrile, acrylic acid, methacrylic acid, acrylamide, N-methylolacrylamide, N,N-di(alkyl)acrylamide, 2-acrylamido-2-methylpropanesulphonic acid (AMPS) or one of its salts, 2-sulphoethylmethacrylic acid (2-SEM) or one of its salts, and the phosphate ester of methacrylate-terminated polypropylene glycol or one of its salts, poly(ethylene oxide) methyl ether acrylate (PEOAA), poly(ethylene oxide) methyl ether methacrylate (PEOMA).

Even more preferably, the at least one ethylenically unsaturated monomer copolymerizable with vinylidene chloride is selected from the group consisting of maleic anhydride, itaconic acid, the acrylic or methacrylic monomers selected from the group consisting of methyl acrylate, methyl methacrylate, ethyl acrylate, ethyl methacrylate, n-butyl acrylate, n-butyl methacrylate, 2-ethylhexyl acrylate, 2-ethylhexyl methacrylate, 2-hydroxyethyl acrylate, 2-hydroxyethyl methacrylate, glycidyl methacrylate, glycidyl acrylate, acrylonitrile, methacrylonitrile, acrylic acid, methacrylic acid, acrylamide, N-methylolacrylamide, N,N-di(alkyl)acrylamide, 2-acrylamido-2-methylpropanesulphonic acid (AMPS) or one of its salts, 2-sulphoethylmethacrylic acid (2-SEM) or one of its salts, and the phosphate ester of methacrylate-terminated polypropylene glycol or one of its salts, poly(ethylene oxide) methyl ether acrylate (PEOAA), poly(ethylene oxide) methyl ether methacrylate (PEOMA).

Most preferably, the at least one ethylenically unsaturated monomer copolymerizable with vinylidene chloride is selected from the group consisting of methyl acrylate, methyl methacrylate, ethyl acrylate, ethyl methacrylate, n-butyl acrylate, n-butyl methacrylate, 2-ethylhexyl acrylate, 2-ethylhexyl methacrylate, 2-hydroxyethyl acrylate, 2-hydroxyethyl methacrylate, glycidyl methacrylate, glycidyl acrylate, acrylonitrile, methacrylonitrile, acrylic acid, methacrylic acid, acrylamide, N-methylolacrylamide, N,N-di(alkyl)acrylamide, poly(ethylene oxide) methyl ether acrylate (PEOAA), poly(ethylene oxide) methyl ether methacrylate (PEOMA).

The process of the invention is carried out in the present of a RAFT/MADIX agent. The expression "RAFT/MADIX agent", which for the avoidance of doubt is intended to mean "RAFT or MADIX agent", is used in the present specification to refer to a class of compounds containing the functional group -X(=S)-S-, wherein X is phosphorous or carbon, preferably carbon. MADIX agents are characterized by the presence of the xanthate functional group, namely the -O-C(=S)-S- group.

RAFT/MADIX agents are capable to act as a reversible chain transfer agent in free-radical polymerizations, thereby inducing reversible-addition fragmentation transfer reactions to create an equilibrium between propagating radicals (i.e. the growing polymer chain) and so-called dormant species (containing the chain transfer agent fragment) that can become active again. The generally accepted mechanism of RAFT/MADIX controlled radical polymerization is shown in Scheme I.

Any RAFT/MADIX agent known in the art may be used in the inventive process. Non-limiting examples of suitable RAFT/MADIX agents are those disclosed in WO 98/058974 A (RHODIA CHIMIE) 30.12.1998 and in WO 98/01478 A (E.I. DUPONT DE NEMOURS AND COMMONWEALTH SCIENTIFIC AND INDUSTRIAL RESEARCH ORGANIZATION) 15.01.1998 and in FAVIER, A., et al. Experimental requirements for an efficient control of free-radical polymerizations via the Reversible-Addition Fragmentation chain Transfer (RAFT) process. Macromol. Rapid Commun.. 2006, vol.27, p.653-692.

In a first embodiment of the process of the invention RAFT/MADIX agents suitable for use in the process include those of general formula (II): 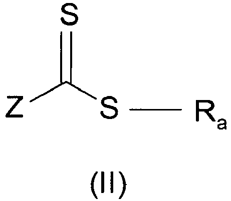 where Rₐ is an organic group optionally substituted with one or more hydrophilic groups and Z is any group that can promote sufficient reactivity of the thiocarbonyl group towards radical addition.

Rₐ may be selected from C₁-C₆ alkyl, C₁-C₆ alkoxy, aryl or heteroaryl, each of which may be substituted with one or more hydrophilic groups selected from -CO₂H, -CO₂R, -CN, -SO₃H, -OSO₃H, -SOR, -SO₂R, -OP(OH)₂, -P(OH)₂, -PO(OH)₂, -OH, -OR, -(OCH₂-CHR)_{w}-OH, -(OCH₂ -CHR)_{w}-OR, -CONH₂, CONHR¹, CONR¹R², -NR¹R², -NR¹R²R³, where R is selected from C₁-C₆ alkyl, w is 1 to 10, R¹, R² and R³ are independently selected from C₁-C₆ alkyl and aryl which are optionally substituted with one or more hydrophilic substituent selected from -CO₂H, -SO₃H, -OSO₃ H, -OH, -(COCH₂CHR)_{w}-OH, -CONH₂, -SOR and SO₂R, and salts thereof, wherein R and w are as defined above.

Preferably Rₐ is selected, without limitation, from the group consisting of: -CH(CH₃)CO₂H, -CH(CO₂H)CH₂CO₂H, -C(CH₃)₂CO₂H, -CH₂(C₆H₅), -C(CN)(CH₃)CO₂H, -C(CN)(CH₃)(CH₂)₂CO₂H.

As used herein, the terms "aryl" and "heteroaryl" refer to any substituent which includes or consists of one or more aromatic or heteroaromatic ring respectively, and which is attached via a ring atom. The rings may be mono or polycyclic ring systems, although mono or bicyclic 5 or 6 membered rings are preferred. The term "alkyl", used either alone or in combination, as in "alkenyloxyalkyl", "alkylthio", "alkylamino" and "dialkylamino" denotes straight chain, branched or cyclic alkyl, preferably C₁-C₂₀ alkyl or cycloalkyl. The term "alkoxy" denotes straight chain or branched alkoxy, preferably C₁-C₂₀ alkoxy. Examples of alkoxy include methoxy, ethoxy, n-propoxy, isopropoxy and the different butoxy isomers. The term "alkenyl" denotes groups formed from straight chain, branched or cyclic alkenes including ethylenically mono-, di- or poly-unsaturated alkyl or cycloalkyl groups as previously defined, preferably C₂-C₂₀ alkenyl. The term "acyl" either alone or in combination, as in "acyloxy", "acylthio", "acylamino" or "diacylamino", denotes carbamoyl, aliphatic acyl group and acyl group containing an aromatic ring, which is referred to as aromatic acyl or a heterocyclic ring which is referred to as heterocyclic acyl, preferably C₁-C₂₀ acyl.

In formula (II) above Z may be selected among optionally substituted alkoxy, optionally substituted aryloxy, optionally substituted alkyl, optionally substituted aryl, optionally substituted heterocyclyl, optionally substituted arylalkyl, optionally substituted alkylthio, optionally substituted arylalkylthio, dialkoxy- or diaryloxy- phosphinyl [-P(=O)OR⁴₂], dialkyl- or diaryl- phosphinyl [-P(=O)R⁴₂], where R⁴ is selected from the group consisting of optionally substituted C₁-C₁₈ alkyl, optionally substituted C₂ -C₁₈ alkenyl, optionally substituted aryl, optionally substituted heterocyclyl, optionally substituted arylalkyl, optionally substituted alkaryl, optionally substituted acylamino, optionally substituted acylimino, optionally substituted amino, a polymer chain formed by any mechanism, for example polyalkylene oxide polymers such as water soluble polyethylene glycol or polypropylene glycol, and alkyl end capped derivatives thereof. Optional substituents for R⁴ and Z groups include epoxy, hydroxy, alkoxy, acyl, acyloxy, carboxy (and its salts), sulfonic acid (and its salts), alkoxy-or aryloxy- carbonyl, isocyanato, cyano, silyl, halo, and dialkylamino.

Preferably, Z is selected among optionally substituted alkoxy, optionally substituted aryloxy, optionally substituted alkylthio, optionally substituted arylalkylthio, dialkoxy- or diaryloxy- phosphinyl [-P(=O)OR⁴₂], dialkyl- or diaryl- phosphinyl [-P(=O)R⁴₂], where R⁴ is as defined above.

More preferably Z is selected, without limitation, from the group consisting of: -OR⁵, -SR⁵, where R⁵ is an optionally substituted C₁-C₂₀ alkyl, -NR⁵R⁶ wherein R⁵ is as defined and R⁶ is selected from optionally substituted C₁ -C₂₀ and alkyl optionally substituted aryl, and 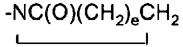 wherein e is an integer from 2 to 4.

Most preferably, Z is selected, without limitation, from the group consisting of -SCH₂(C₆H₅), -S(CH₂)ᵤCO₂H wherein u is an integer from 2 to 11, -SC_{z} H_{2z+1} , -OC_{z}H_{2z+1}, wherein z is an integer from 1 to 12, preferably from 2 to 12, such as 2, 3, 4, 6, 8, 10,12 , -SCH₂CH₂OH, -OCH₂CF₃, -N(C₆H₅ )(CH3).

In a second embodiment of the process of the invention RAFT/MADIX agents suitable for use in the process include those of general formula (III): 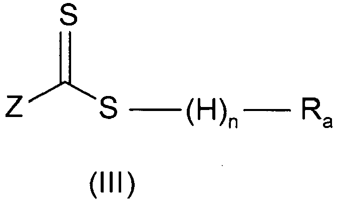 where Z and Rₐ are as defined above.

In formula (III) each H is independently a polymerised residue of an ethylenically unsaturated monomer and n is an integer from 1 to 200, typically from 1 to 100, preferably from 1 to 60, more preferably from 1 to 50, still more preferably from 1 to 20, and most preferably from 1 to 10.

RAFT/MADIX agents of formula (III) can be prepared by carrying out the controlled polymerization reaction of at least one ethylenically unsaturated monomer precursor to H in the presence of a RAFT/MADIX agent of formula (II), under polymerization conditions disclosed in the art.

The RAFT/MADIX agents of formulas (II) and (III) typically have structural features that enable them to physically associate with the clay material. Generally the RAFT/MADIX agent is physically associated with the clay material by being adsorbed onto its outermost surface, the affinity of the RAFT/MADIX agent for the surface of the clay material may be controlled in a number of ways.

For example, with reference to formula (III), the RAFT agent may derive its surface affinity through one or more of the -Z group, -(H)ₙ- group, and the -Rₐ group. The surface affinity afforded by the Z, -(H)ₙ-, and Rₐ groups will typically result from one or more of these groups themselves comprising group(s), section(s), or region(s) having a combination of hydrophilic and hydrophobic properties.

Advantageously said surface affinity may be provided by the -(H)ₙ- group in the RAFT/MADIX agent of formula (III).

In a preferred aspect of the invention the -(H)ₙ- group comprises recurring units deriving from at least one ethylenically unsaturated monomer having hydrophilic character (h1) and from at least one ethylenically unsaturated monomer having hydrophobic character (h2).

The terms "hydrophilic" and "hydrophobic" are used throughout the present specification with their commonly recognised meaning, that is to refer to compounds and/or functional parts of compounds "provided with a tendency to bind or absorb water" (hydrophilic) or "incapable of dissolving in water" (hydrophobic).

The -(H)ₙ- group may comprise recurring units deriving from one ethylenically unsaturated monomer having hydrophilic character (h1) and from one ethylenically unsaturated monomer having hydrophobic character (h2).

The -(H)ₙ- group may alternatively comprise recurring units deriving from more than one ethylenically unsaturated monomer having hydrophilic character (h1) and/or from more than one ethylenically unsaturated monomer having hydrophobic character (h2). In an advantageous aspect of this embodiment the -(H)ₙ- group comprises recurring units deriving from two ethylenically unsaturated monomers having hydrophilic character (h1) and from one ethylenically unsaturated monomer having hydrophobic character (h2). Other combinations are however possible and within the scope of the present invention.

Recurring units deriving from monomers h1 and/or h2 in group -(H)ₙ- may be arranged either in a random, alternating, gradient or block copolymer structure. The expression "arranged in a random structure" is intended to denote a distribution of the monomers which is random and the proportion of which is statistically the same within group -(H)ₙ-. The expression "arranged in an alternating structure" is intended to denote a distribution in which the monomers composing group -(H)ₙ- are linked together alternately. The expression "arranged in a block structure" is intended to denote a distribution in which a linking of more or less lengthy sequences formed of the same monomer or monomers is observed. The expression "arranged in a gradient structure" is intended to denote a structure of at least two monomers in which the relative proportion of one monomer with respect to the other(s) increases or decreases all along the chain.

In an embodiment the RAFT/MADIX agent could have a block arrangement of the hydrophilic and hydrophobic recurring units as represented by formulas (IVa) and (IVb): 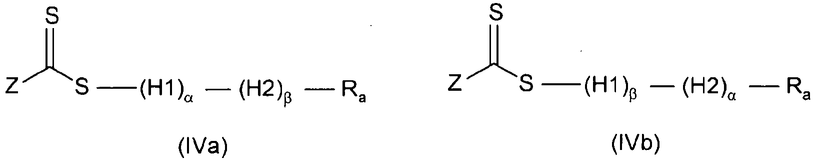 where H1 represents a hydrophilic block comprising recurring units deriving from at least one ethylenically unsaturated monomer having hydrophilic character (h1); H2 represents a hydrophobic block comprising recurring units deriving from at least one ethylenically unsaturated monomer having hydrophobic character (h2); and α and β are independently an integer from 1 to 99, preferably from 1 to 50, more preferably from 1 to 30, most preferably from 1 to 15.

In another embodiment the RAFT/MADIX agent could be characterised by a random arrangement of hydrophilic and hydrophobic recurring units as represented by formulas (Va) and (Vb): 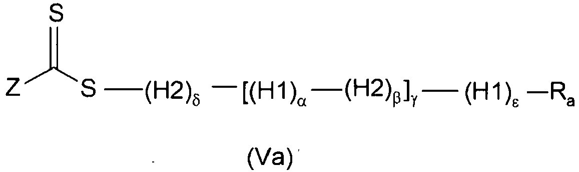 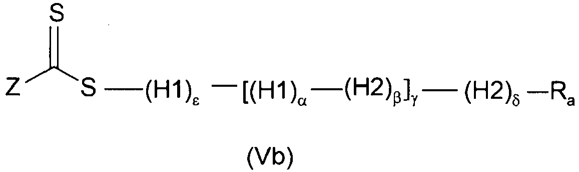 wherein H1, H2, α and P are as defined above, and δ and ε are independently an integer from 1 to 10, preferably from 1 to 5, each repeat unit γ may be the same or different, and wherein γ is an integer from 1 to 10, preferably from 1 to 5, more preferably from 1 to 3.

In still another embodiment the RAFT/MADIX agent could have the following alternating structures (VIa) and (VIb): 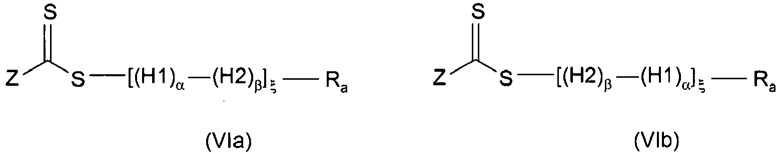 where H1, H2, α and β are as defined above, and ξ is an integer from 1 to 50, preferably from 2 to 25, more preferably from 2 to 10.

Each of H1 and/or H2 in anyone of formulas (IVa), (IVb), (Va), (Vb), (VIa) and (VIb) may independently comprise only one recurring unit deriving from at least one ethylenically unsaturated monomer having hydrophilic character (h1) or hydrophobic character (h2).

Each H1 and/or H2 in anyone of formulas (IVa), (IVb), (Va), (Vb), (VIa) and (Vlb) may comprise recurring units deriving from more than one type of ethylenically unsaturated monomer having hydrophilic character (h1) or hydrophobic character (h2).

Groups Z and Rₐ in anyone of formulas (IV), (V) and (VI) are as defined above for RAFT/MADIX agents of formula (II).

In any one of the RAFT/MADIX agents of formulas (II) to (VI) group Z may be a polymer chain formed by any mechanism. Such a polymer chain may be the same or different from the -(H)ₙ- group in the RAFT/MADIX agent of formula (III) or of any of its variants in formulas (IVa), (IVb), (Va), (Vb), (VIa) and (Vlb) as defined above.

Provided that the RAFT/MADIX agent exhibits surface affinity for the clay material, the present invention is intended to embrace all such structures. In this respect, to improve the affinity of the RAFT/MADIX agent with the surface of the clay material, it may be advantageous to employ a RAFT/MADIX agent having an overall ionic charge opposite to the ionic charge present on the surface of the clay material.

Preferably the RAFT/MADIX agent used in the inventive process comprises a random succession of hydrophilic regions (H1) and of hydrophobic regions (H2) as shown in formulas (Va) or (Vb).

Suitable ethylenically unsaturated monomers having hydrophilic character (h1) typically are selected among those comprising at least one carboxylic, sulfonic, sulfuric, phosphonic, phosphoric acid functional group, their salt or precursor thereof.

Among monomers (h1) comprising at least one carboxylic functional group or precursor thereof mention may be made for instance of α-β-ethylenically unsaturated carboxylic acids and the corresponding anhydrides, such as acrylic acid, acrylic anhydride, methacrylic acid, methacrylic anhydride, maleic acid, maleic anhydride, fumaric acid, itaconic acid, N-methacryloylalanine, N-acryloylglycine, *p*-carboxystyrene, and their water-soluble salts. Among the monomers (h1) comprising at least one carboxylic functional group, acrylic acid or methacrylic acid may be favoured.

Among monomers (h1) comprising at least one sulfuric or sulfonic functional group, or precursors thereof, mention may be made for instance of vinyl sulfonic acid, styrene sulfonic acid, 2-acrylamido-2-methylpropane sulfonic acid, 3-[N-(2-methacryloyloxyethyl)-N,N-dimethylammonio]propane sulfonic acid, 3-[N,N-dimethylvinylbenzylammonio)propane sulfonic acid, 3-[2-(N-methacrylamido)-ethyldimethylammonio]propane sulfonic acid, 3-(methacryloyloxy)propane sulfonic acid, 3-(acryloyloxy)propane sulfonic acid, 2-(methacryloyloxy)ethane sulfonic acid, 2-(acryloyloxy)ethane sulfonic acid, 2-methylenesuccinic acid bis(3-sulfopropyl) ester, 3-[N-(3-methacrylamidopropyl)-N,N-dimethyl]ammoniopropane sulfonic acid, -(2-vinylpyridinio)propane sulfonic acid and their corresponding salts and sulfate analogs. Monomers comprising precursors of sulfonic acid functional groups may be chosen, from example, from *n*-butyl *p* -styrenesulfonate, neopentyl *p*-styrene sulfonate, which produce a sulfonic acid functional group, or its salt, by hydrolysis after polymerization.

Notable examples of monomers (h1) comprising a phosphonic acid or phosphonic acid precursor are for instance:
N-methacrylamidomethylphosphonic acid ester derivatives, in particular the *n*-propyl ester, the methyl ester, the ethyl ester, the *n*-butyl ester or the isopropyl ester, and their phosphonic monoacid and diacid derivatives, such as N-methacrylamidomethylphosphonic diacid;
N-methacrylamidoethylphosphonic acid ester derivatives, such as N-methacrylamidoethylphosphonic acid dimethyl ester or N-methacrylamidoethylphosphonic acid di(2-butyl-3,3-dimethyl)ester, and their phosphonic monoacid and diacid derivatives, such as N-methacrylamidoethylphosphonic diacid; N-acrylamidomethylphosphonic acid ester derivatives, such as N-acrylamidomethylphosphonic acid dimethyl ester, N-acrylamidomethylphosphonic acid diethyl ester or bis(2-chloropropyl)N-acrylamidomethylphosphonate, and their phosphonic monoacid and diacid derivatives, such as N-acrylamidomethylphosphonic acid; vinylbenzylphosphonate dialkyl ester derivatives, in particular the di(n-propyl), di(isopropyl), diethyl, dimethyl, di(2-butyl-3,3'-dimethyl) and di(t-butyl) ester derivatives, and their phosphonic monoacid and diacid alternative forms, such as vinylbenzylphosphonic diacid; diethyl 2-(4-vinylpehnyl)ethanephosphonate; dialkylphosphonoalkyl acrylate and methacrylate derivatives, such as 2-(acryloyloxy)ethylphosphonic acid dimethyl ester and 2-(methyacryloyloxy)ethylphosphonic acid dimethyl ester, 2-(methacryloyloxy)methylphosphonic acid diethyl ester, 2-(methacryloyloxy)methylphosphonic acid dimethyl ester, 2-(methacryloyloxy)propylphosphonic acid dimethyl ester, 2-acryloyloxy)methylphosphonic acid diisopropyl ester or 2-(acryloyloxy)ethylphosphonic acid diethyl ester, and their phosphonic monoacid and diacid alternative forms, such as 2-(methacryloyloxy)ethylphosphonic acid, 2-(methacryloyloxy)methylphosphonic acid, 2-(methacryloyloxy)propylphosphonic acid, 2-(acryloyloxy)propylphosphonic acid and 2-acryloyloxy)ethylphosphonic acid; vinylphosphonic acid, optionally substituted by cyano, phenyl, ester or acetate groups, vinylidenephosphonic acid, in the form of a salt or the form of its isopropyl ester, or bis(2-chloroethyl)vinylphosphonate.

Ethylenically unsaturated monomers (h1) can also be chosen from the phosphate analogs of the phosphonate-comprising monomers described above. Mention may be made, as specific phosphate-comprising monomers, of: 2-(methacryloyloxy)ethyl phosphate, 2-(acryloyloxy)ethyl phosphate, 2-(methacryloyloxy)propyl phosphate, 2-(acryloyloxy)propyl phosphate, and acrylates or methacrylates of polyethylene glycol omega phosphates or acrylates or methacrylates of polypropylene glycol omega phosphates.

Among non-ionic ethylenically unsaturated monomers having hydrophilic character (h1) mention may be made of 2-hydroxyethyl acrylate, 2-hydroxyethyl methacrylate, N,N-dimethylacrylamide, N-vinyl-2-pyrrolidone.

Among ethylenically unsaturated monomers having hydrophilic character (h1) comprising cationic functional groups mention may be made of dimethylaminoethylmethacrylate and its quaternary ammonium salts, N-vinylpyridine and its quaternary ammonium salts, vinylbenzylchloride and its quaternary ammonium salts.

Preferred ethylenically unsaturated monomers having hydrophilic character (h1) are selected among those having an anionic functional group or a precursor thereof.

Advantageously, the ethylenically unsaturated monomer having hydrophilic character (h1) is selected without limitation, from the group consisting of acrylic or methacrylic acids, vinyl phosphonic acid, vinyl sulfonic acid, styrene sulfonic acid, and 2-acrylamido-2-methylpropane sulfonic acid, their salts or their precursors.

Typically preferred ethylenically unsaturated monomers having hydrophilic character (h1) are characterized in that they contain functional groups whose corresponding acid has an acid dissociation constant pKa of less than 6, preferably of less than 5, more preferably of less than 4.5 and even more preferably of less than 4.

Suitable ethylenically unsaturated monomers having a hydrophobic character (h2) are for instance those selected from the group consisting of: styrene and styrene derivatives, such α-methylstyrene, *p*-methylstyrene or *p*-(*t-*butyl)styrene; esters of acrylic or methacrylic acid, such as methyl acrylate, ethyl acrylate, propyl acrylate, *n*-butyl acrylate, isobutyl acrylate, 2-ethylhexyl acrylate, *t*-butyl acrylate, methyl methacrylate, ethyl methacrylate, *n*-butyl methacrylate, isobutyl methacrylate; C₃-C₁₂ vinyl nitriles, e.g. acrylonitrile or methacrylonitrile; vinyl esters of carboxylic acids, such as vinyl or allyl acetates, propionates, stearates; vinyl halides, vinylidene halides, or vinylaromatic halides, e.g. vinyl chloride, vinylidene chloride or pentafluorostyrene; α-olefins, such as ethylene; conjugated diene monomers, for examples butadiene, isoprene, chloroprene; and monomers capable of generating polydimethylsiloxane chains (PDMS). Among ethylenically unsaturated monomers having a hydrophobic character (h2) *n*-butyl acrylate may be preferred.

It will be appreciated by those skilled in the art that the hydrophilic/hydrophobic character of the RAFT/MADIX agent will be selected depending on the nature of the clay material and of the liquid phase in which the process is carried out.

Non limiting examples of specific combinations of hydrophilic/hydrophobic monomers for the preparation of the -(H)ₙ- group are for instance acrylic acid/*n-*butyl acrylate.

Specific examples of the RAFT/MADIX agents of formula (III) which have been found useful in the inventive process are for instance: a poly[(butyl acrylate)ₚ-*co*-(acrylic acid)_{q}]-RAFT agent wherein the recurring units deriving from butyl acrylate and acrylic acid are randomly distributed and wherein 2 ≤ p ≤ 20, preferably 2 ≤ p ≤ 15, and 2 ≤ q ≤ 25, preferably 3 ≤ q ≤ 20.

Any liquid phase may be used in the inventive process provided the clay material and the RAFT/MADIX agent can be dispersed therein.

In practical terms, the liquid phase functions as a reaction medium in which vinylidene chloride and the one or more ethylenically unsaturated monomer are polymerised to form a vinylidene chloride polymer at the surface of the clay material. The monomer(s) may be present in the liquid phase as a separate liquid phase, it may be fully soluble in the liquid phase, or the liquid phase may itself consist essentially of the monomer(s).

The process may in fact be carried out in a liquid phase essentially comprising vinylidene chloride and any optional ethylenically unsaturated monomer polymerizable with vinylidene chloride.

Alternatively, the process may be carried out in the presence of a liquid phase different from vinylidene chloride and the optional ethylenically unsaturated monomer. The liquid phase may be either formed of an organic solvent or it may be water.

In a preferred embodiment of the process of the invention, the liquid phase is water and the process produces an aqueous dispersion of vinylidene chloride polymer composite.

When the liquid phase is water the process may be an emulsion radical polymerization process, that is a radical polymerization process which is carried out in an aqueous medium in the presence of emulsifying agents and radical initiators which are soluble in water.

Alternatively, when the liquid phase is water the process may be a suspension polymerization process, that is a radical polymerization process in which oil-soluble initiators are employed and an emulsion of droplets of monomers is produced by virtue of powerful mechanical stirring and the presence of emulsifying or suspension agents.

Where the method of the invention is performed using a continuous liquid phase which does not consist essentially of vinylidene chloride and the one or more optional ethylenically unsaturated monomer, it is preferred that the monomer(s) is introduced to the liquid phase after the clay material and the RAFT/MADIX agent interact so as to provide for a stable dispersion.

In accordance with the process of the invention, vinylidene chloride and optionally at least one ethylenically unsaturated monomer are polymerised under the control of the RAFT/MADIX agent to form polymer at the surface of the clay material.

In accordance with the process of the invention, vinylidene chloride and optionally at least one ethylenically unsaturated monomer are polymerised under the control of the RAFT/MADIX agent of any one of formulas (II), (III), (IVa), (IVb), (Va), (Vb), (VIa) and (VIb) to form polymer at the surface of the clay material.

The polymerisation will usually require initiation from a source of free radicals. The source of initiating radicals can be provided by any suitable method of generating free radicals, such as the thermally induced homolytic scission of suitable compound(s) (thermal initiators such as peroxides, peroxyesters, or azo compounds), redox initiating systems, photochemical initiating systems or high energy radiation such as electron beam, X- or gamma-radiation. The initiating system is chosen such that under the reaction conditions there is no substantial adverse interaction of the initiator or the initiating radicals with the RAFT/MADIX agent under the conditions of the reaction.

Other conventional additives may be added to the liquid phase during the polymerization process, such as dispersants, oxidants, surfactants, pH regulators as conventionally known in the art.

Advantageously it might be possible to carry out an emulsion polymerization process of vinylidene chloride on the surface of a clay material without the addition of any surfactant when the RAFT/MADIX agent is selected among those of formulas (III), (IVa), (IVb), (Va), (Vb), (VIa) and (Vlb).

The process of the invention may be operated in batch, semi-continuous or continuous modes. Where the liquid phase consists essentially of vinylidene chloride and any optional ethylenically unsaturated monomer that are polymerised to form the polymer, the method is preferably operated in batch mode, and where the liquid phase does not consist essentially of vinylidene chloride and any optional ethylenically unsaturated monomer that are polymerised to form the polymer, the method is preferably operated in semi-continuous or continuous modes.

At the end of the process the vinylidene chloride polymer composite may be either isolated as a solid from the liquid phase or, for instance when the liquid phase is water, used as an aqueous dispersion.

Conventional techniques can be used for the isolation of the vinylidene chloride polymer composite from the liquid phase.

The composite may be subjected to further finishing treatments before use, such as a treatment for the removal of the RAFT/MADIX agent as disclosed for instance in WO 02/090397 A (RHODIA CHIMIE) 14.11.2002.

Accordingly a second object of the present invention is a vinylidene chloride polymer composite comprising a clay material encapsulated in a vinylidene chloride polymer.

The definitions and preferences defined previously within the context of the process for preparing a vinylidene chloride polymer composite also apply to the vinylidene chloride polymer composite, with particular reference to the composition of the vinylidene chloride polymer and the nature and size of the clay material.

In a first embodiment the vinylidene chloride polymer composite comprises a clay material, having and a vinylidene chloride polymer comprising at least 50 wt% of recurring units deriving from vinylidene chloride and at most 50 wt% of recurring units deriving from one or more ethylenically unsaturated monomer selected from the group consisting of methyl acrylate, methyl methacrylate, ethyl acrylate, ethyl methacrylate, n-butyl acrylate, n-butyl methacrylate, 2-ethylhexyl acrylate, 2-ethylhexyl methacrylate, 2-hydroxyethyl acrylate, 2-hydroxyethyl methacrylate, glycidyl methacrylate, glycidyl acrylate, acrylonitrile, methacrylonitrile, acrylic acid, methacrylic acid, acrylamide, N-methylolacrylamide.

The clay material may be advantageously gibbsite.

The clay particle may have an average particle size of from 1 to 250 nm, preferably form 2 to 150 nm.

The amount of the clay material in the vinylidene chloride polymer composite is typically of at least 0.05 wt% with respect to the total weight of the composite, even at least 0.1 wt%. The amount of the clay material generally does not exceed 50 wt%, more typically it does not exceed 45 wt%. Vinylidene chloride polymer composites comprising from 1 wt% to 40 wt%, and even from 1 wt% to 30 wt% of the clay material have been found to be suitable for most applications.

A further object of the present invention is a composition comprising the vinylidene chloride polymer composite as defined above.

In one aspect the composition may be a solid composition, typically comprising the vinylidene chloride polymer composite and at least one polymer. The polymer used in the composition will be typically, but not limiting, selected among those polymers which are compatible with vinylidene chloride polymers. For instance, the other polymer may be a vinylidene chloride polymer, whose composition may be the same or different from the composition of the vinylidene chloride polymer in the vinylidene chloride polymer composite.

In another aspect the composition may be a liquid composition comprising the vinylidene chloride polymer composite and a liquid phase.

The liquid phase may be the same or different from the liquid phase used in the process for preparing the vinylidene chloride polymer composite. In a particularly advantageous aspect of the process of the invention, when the liquid phase does not consist essentially of vinylidene chloride and any optional ethylenically unsaturated monomer, the process may be conveniently used to directly prepare a dispersion of the vinylidene chloride polymer composite in a liquid which is ready for use. Alternatively, the liquid composition may be prepared by dispersing or suspending the vinylidene chloride polymer composite in a liquid.

The process of the invention makes it possible to obtain vinylidene chloride polymer composites which may give rise to the formation of high-quality films, having improved barrier properties, in particular oxygen permeability and water vapour permeability, and/or improved UV stability, thermal stability, β- radiation stability.

Accordingly further objects of the present invention are the use of the vinylidene chloride polymer composites of the invention for the preparation of films, as well as the films comprising a vinylidene chloride polymer composite as above defined.

In one embodiment the films may be prepared by extrusion of a solid polymer composition comprising the vinylidene chloride polymer composite. Alternatively, the films may be prepared by conventional coating techniques either from a molten composition comprising the vinylidene chloride polymer composite or from a dispersion (either in water or in an appropriate solvent) of the vinylidene chloride polymer composite.

The invention will be now described in more detail with reference to the following examples, whose purpose is merely illustrative and not intended to limit the scope of the invention.

### EXAMPLES

### MATERIALS

Acrylic acid (AA, Aldrich, 99%) was purified through inhibitor removing columns. Butyl acrylate (BA, Aldrich, ≥99%), vinylidene chloride (VDC, Aldrich, 99%) and methyl acrylate (MA, Aldrich, 99%) were distilled under reduced pressure to remove inhibitors.

Dibenzyl trithiocarbonate (DBTTC) was prepared according to ALI, et al. .. Langmuir. 2009, vol.25, no.18, p.10523.

Gibbsite nanoparticles dispersion was prepared according to WIERENGA, A. M, et al. Aqueous dispersions of colloidal gibbsite platelets: synthesis, characterisation and intrinsic viscosity measurements. Colloids Surf. A. 1998, vol.134, p.359-371.

**Preparation of a composite comprising a vinylidene chloride/methyl acrylate copolymer and gibbsite particles using poly[(butyl acrylate)p-*co* -(acrylic acid)q]-RAFT agent.**

### Part (a) : Preparation of a poly[(butyl acrylate)p-co-(acrylic acid)q]-RAFT agent with p = 5 and q = 5 using dibenzyl trithiocarbonate (Formula (II) wherein Z= -SCH₂(C₆H₅) and Rₐ=-CH₂(C₆H₅)).

In a typical recipe for the preparation of poly(BAₚ-*co*-AA_{q})-DBTTC RAFT a solution of acrylic acid (5.45 g), butyl acrylate (9.69 g), azobisisobutyronitrile (0.22 g) and DBTTC (4.4 g) in 25 g of 1,4-dioxane was prepared in a 100 ml round bottom flask. The solution was stirred magnetically and purged with nitrogen for 30 minutes. The flask was then heated at 70°C for 5 hours (96% conversion of BA, 96% conversion of AA).

The poly(BAₚ-*co-*AA_{q})-DBTTC RAFT agent was isolated in dry form by drying the resulting solution overnight in a vacuum oven at 50°C.

H1 NMR spectroscopy confirmed the composition of the RAFT agent as poly(BA₅-*co*-AA₅)-RAFT.

### Part (b): Adsorption of poly(BA₅-co-AA₅)-DBTTC RAFT agent at the surface of dispersed gibbsite nanoparticles.

The poly(BA₅-*co*-AA₅)-DBTTC RAFT agent (0.6 g) prepared in part (a) was dissolved in deionized water by adjusting the pH to 8 with sodium hydroxide and added to a gibbsite nanoparticles dispersion containing 1.0 g of gibbsite nanoparticles. The solution (140.1 total g of water) was stirred overnight.

The successful adsorption of poly(BA₅-*co*-AA₅)-DBTTC RAFT agent at the gibbsite particles surface was evidenced by the evolution of the Zeta-potential. Zeta potential of gibbsite is around 52mV. After adsorption of poly(BA₅-*co*-AA₅)-DBTTC RAFT agent, zeta potential of the dispersion was around -49mV.

Zeta-potential measurements performed on a Malvern Nano ZS particle size analyzer. Given volumes of the gibbsite nanoparticles dispersion and of poly(BA₅-*co*-AA₅)-DBTTC RAFT agent aqueous stock solutions were mixed and diluted in deionized water and stirred overnight so as to obtain samples containing known amounts of gibbsite nanoparticles and macro-RAFT agent increasing known concentrations. For each sample the Zeta-potential was calculated by taking an average of three measurements.

### Part (c) : Emulsion copolymerization of vinylidene chloride and methyl acrylate in the presence of a thermal free radical initiator

Emulsion copolymerization of vinylidene chloride and methyl acrylate (in a 9:1 mass ratio) was carried out in presence of poly(BA₅-co-AA₅)-DBTTC adsorbed at the surface of gibbsite particles obtained in part (b).

The modified gibbsite particles obtained in part (b) (56.98 g), an emulsion of monomers (VDC: 12.83 g and MA: 1.26 g), and water (2.98 g), were purged with argon during 30 min.

An initiator aqueous solution (ammonium persulfate 0.0314 g) was purged with argon during 30 min.

After the injection of the initiator aqueous dispersion in the reactor, the temperature was raised to 70°C, under agitation (agitation speed was set at 250 rpm).

The reaction was performed in a 100 mL stainless steel reactor, equipped with a stainless steel 4-blabed mechanical stirrer and internal pressure and temperature sensors. Oxygen was removed from the reactor by purging it via three cycles of vacuum (10-2 mbar) broken with nitrogen. Vacuum was restored in the reactor before charging the initial load. A 3 bars argon overpressure was established in the vessel.

The overall reaction lasted for 6 hours. Residual monomer was stripped by heating up the latex for 1 hour at 60°C under reduced pressure.

A latex comprising gibbsite nanoparticles encapsulated in a vinylidene chloride/methyl acrylate copolymer was obtained.

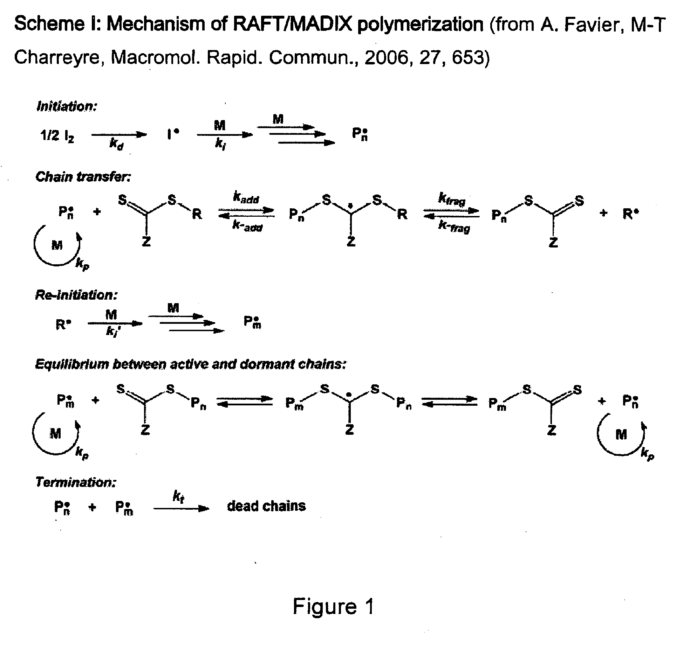

## Claims

1. A process for preparing a vinylidene chloride polymer composite comprising: providing a dispersion of a clay material in a liquid phase, said dispersion comprising a RAFT/MADIX agent, selected from the group consisting of:
(i) RAFT/MADIX agents of general formula (II): 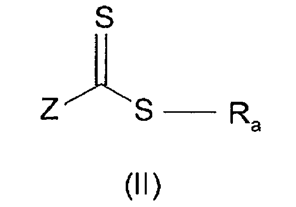 where Rₐ is an organic group optionally substituted with one or more hydrophilic groups and Z is any group that can promote sufficient reactivity of the thiocarbonyl group towards radical addition; and
(ii) RAFT/MADIX agents of general formula (III): 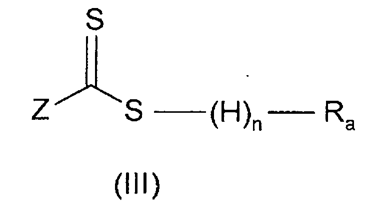 where Z and Rₐ are as defined above; and wherein each H is independently a polymerised residue of an ethylenically unsaturated monomer and n is an integer from 1 to 200;
- providing vinylidene chloride and optionally at least one ethylenically unsaturated monomer copolymerisable therewith to said dispersion; and
- polymerising vinylidene chloride and optionally said at least one ethylenically unsaturated monomer under the control of said RAFT/MADIX agent to form vinylidene chloride polymer comprising at least 50 wt% of recurring units deriving from vinylidene chloride at the surface of said clay material.

2. Process according to claim 1 wherein the clay material is selected from the group consisting of montmorillonite, natural and synthetic hectorite, laponite, saponite, mica, vermiculite, nontronite, beidellite, volkonskoite, kaolinite, serpentinite, natural and synthetic saponite, gibbsite, fluorinated montmorillonite and fluorinated mica.

3. Process according to any preceding claims wherein the clay material is gibbsite.

4. Process according to any preceding claims wherein the liquid phase is water.

5. Process according to any preceding claims wherein the RAFT/MADIX agent is of formula (III): 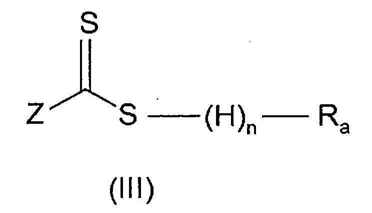 where Rₐ is selected from C₁-C₆ alkyl, C₁-C₆ alkoxy, aryl or heteroaryl, each of which may be substituted with one or more hydrophilic groups selected from -CO₂H, -CO₂R, -CN, -SO₃H,-OSO₃H, -SOR, -SO₂R, -OP(OH)₂, -P(OH)₂, -PO(OH)₂, -OH, -OR,-(OCH₂-CHR)_{w}-OH, -(OCH₂-CHR)_{w}-OR, -CONH₂, CONHR¹, CONR¹R², -NR¹R², -NR¹R²R³, where R is selected from C₁-C₆ alkyl, w is 1 to 10, R¹, R² and R³ are independently selected from C₁-C₆ alkyl and aryl which are optionally substituted with one or more hydrophilic substituent selected from -CO₂H, -SO₃H, -OSO₃H, -OH,-(COCH₂CHR)_{w}-OH, -CONH₂, -SOR and SO₂R, and salts thereof, wherein R and w are as defined; wherein Z is selected among optionally substituted alkoxy, optionally substituted aryloxy, optionally substituted alkyl, optionally substituted aryl, optionally substituted heterocyclyl, optionally substituted arylalkyl, optionally substituted alkylthio, optionally substituted arylalkylthio, dialkoxy- or diaryloxyphosphinyl [-P(=O)OR⁴₂], dialkyl- or diaryl- phosphinyl [-P(=O)R⁴₂], where R⁴ is selected from the group consisting of optionally substituted C₁-C₁₈ alkyl, optionally substituted C₂-C₁₈ alkenyl, optionally substituted aryl, optionally substituted heterocyclyl, optionally substituted arylalkyl, optionally substituted alkaryl, optionally substituted acylamino, optionally substituted acylimino, optionally substituted amino, a polymer chain formed by any mechanism; and wherein each H is independently a polymerised residue of an ethylenically unsaturated monomer and n is an integer from 1 to 300.

6. Process according to claim 5 wherein -(H)ₙ- comprises recurring units deriving from at least one ethylenically unsaturated monomer having hydrophilic character (h1) and from at least one ethylenically unsaturated monomer having hydrophobic character (h2).

7. Process according to claim 6 wherein the at least one ethylenically unsaturated monomer having hydrophilic character (h1) contains functional groups whose corresponding acid has an acid dissociation constant pKa of less than 6.

8. Process according to anyone of claims 5 to 7 wherein Rₐ is selected from the group consisting of: -CH(CH₃)CO₂H, -CH(CO₂H)CH₂CO₂H,-C(CH₃)₂CO₂H, -CH₂(C₆H₆), -C(CN)(CH₃)CO₂H,-C(CN)(CH₃)(CH₂)₂CO₂H and Z is selected from the group consisting of: -SCH₂(C₆H₅), -S(CH₂)ᵤCO₂H wherein u is an integer from 2 to 11,-SC_{z}H_{2z+1}, -OC_{z}H_{2z+1}, wherein z is an integer from 1 to 12, preferably from 2 to 12, -SCH₂CH₂OH, -OCH₂CF₃, -N(C₆H₅)(CH₃).

9. A vinylidene chloride polymer composite comprising a clay encapsulated in a vinylidene chloride polymer obtainable by the process according to anyone of claims 1 to 8.

10. The vinylidene chloride polymer composite according to claim 9 wherein the content of the clay material is at least 0.05 wt% and at most 50 wt% with respect to the total weight of the composite.

11. The vinylidene chloride polymer composite according to claim 9 or 10 wherein the vinylidene chloride polymer comprises at least 50 wt% of recurring units deriving from vinylidene chloride and at most 50 wt% of recurring units deriving from one or more ethylenically unsaturated monomer selected from the group consisting of methyl acrylate, methyl methacrylate, ethyl acrylate, ethyl methacrylate, n-butyl acrylate, n-butyl methacrylate, 2-ethylhexyl acrylate, 2-ethylhexyl methacrylate, 2-hydroxyethyl acrylate, 2-hydroxyethyl methacrylate, glycidyl methacrylate, glycidyl acrylate, acrylonitrile, methacrylonitrile, acrylic acid, methacrylic acid, acrylamide, N-methylolacrylamide, N,N-di(alkyl)acrylamide, poly(ethylene oxide) methyl ether acrylate (PEOAA), poly(ethylene oxide) methyl ether methacrylate (PEOMA).

12. A composition comprising the vinylidene chloride polymer composite of anyone of claims 9 to 11 and a polymer or a liquid phase.

13. Use of the vinylidene chloride polymer composite of anyone of claims 9 to 11 or of a composition of claim 12 for the preparation of films.

14. Use of a vinylidene chloride polymer composite of anyone of claims 9 to 11 or of a composition of claim 12 for the preparation of a coating.

15. An article comprising the vinylidene chloride polymer composite of anyone of claims 9 to 11 or a composition of claim 12.

## Patentansprüche

1. Verfahren zur Herstellung eines Vinylidenchloridpolymer-Verbundwerkstoffs, bei dem man: eine Dispersion eines Tonmaterials in einer flüssigen Phase bereitstellt, wobei die Dispersion ein RAFT/MADIX-Agens umfasst, das ausgewählt ist aus der Gruppe bestehend aus:
(i) RAFT/MADIX-Agentien der allgemeinen Formel (II): 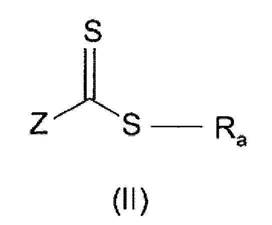 wobei Rₐ für eine organische Gruppe, die gegebenenfalls durch eine oder mehrere hydrophile Gruppen substituiert ist, steht und Z für eine beliebige Gruppe, die eine ausreichende Reaktivität der Thiocarbonylgruppe hinsichtlich Radikaladdition fördern kann, steht; und
(ii) RAFT/MADIX-Agentien der allgemeinen Formel (III): 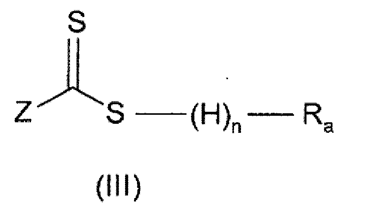 wobei Z und Rₐ wie oben definiert sind und wobei H jeweils unabhängig für einen polymerisierten Rest eines ethylenisch ungesättigten Monomers steht und n für eine ganze Zahl von 1 bis 200 steht;
- Vinylidenchlorid und gegebenenfalls mindestens ein damit copolymerisierbares ethylenisch ungesättigtes Monomer zu der Dispersion gibt und
- Vinylidenchlorid und gegebenenfalls das mindestens eine ethylenisch ungesättigte Monomer unter der Kontrolle des RAFT/MADIX-Agens zu Vinylidenchloridpolymer, das mindestens 50 Gew.-% Wiederholungseinheiten, die sich von Vinylidenchlorid ableiten, an der Oberfläche des Tonmaterials umfasst, polymerisiert.

2. Verfahren nach Anspruch 1, bei dem man das Tonmaterial aus der Gruppe bestehend aus Montmorillonit, natürlichem und synthetischem Hectorit, Laponit, Saponit, Glimmer, Vermiculit, Nontronit, Beidellit, Volkonskoit, Kaolinit, Serpentinit, natürlichem und synthetischem Saponit, Gibbsit, fluoriertem Montmorillonit und fluoriertem Glimmer auswählt.

3. Verfahren nach einem der vorhergehenden Ansprüche, bei dem es sich bei dem Tonmaterial um Gibbsit handelt.

4. Verfahren nach einem der vorhergehenden Ansprüche, bei dem es sich bei der flüssigen Phase um Wasser handelt.

5. Verfahren nach einem der vorhergehenden Ansprüche, wobei das RAFT/MADIX-Agens die Formel (III) aufweist: 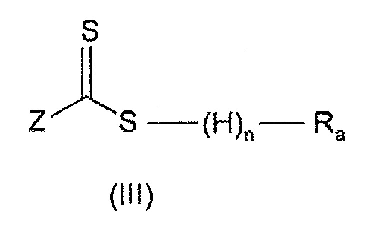 wobei Rₐ aus C₁-C₆-Alkyl, C₁-C₆-Alkoxy, Aryl oder Heteroaryl ausgewählt ist, wobei jede dieser Gruppen durch ein oder mehrere aus-CO₂H, -CO₂R, -CN, -SO₃H, -OSO₃H, -SOR, -SO₂R, -OP(OH)₂, -P(OH)₂, -PO(OH)₂, -OH, -OR, -(OCH₂-CHR)_{w}-OH, -(OCH₂-CHR)_{w}-OR,-CONH₂, CONHR¹, CONR¹R², -NR¹R², -NR¹R²R³ ausgewählte hydrophile Gruppen substituiert sein kann, wobei R aus C₁-C₆-Alkyl ausgewählt ist, w für 1 bis 10 steht, R¹, R² und R³ unabhängig voneinander aus C₁-C₆-Alkyl und Aryl ausgewählt sind, wobei diese Gruppen gegebenenfalls durch einen oder mehrere aus -CO₂H, -SO₃H, OSO₃H, -OH, -(COCH₂CHR)_{w}-OH, -CONH₂, -SOR und SO₂R und Salzen davon ausgewählte hydrophile Substituenten substituiert sind, wobei R und w wie definiert sind; wobei Z ausgewählt ist aus gegebenenfalls substituiertem Alkoxy, gegebenenfalls substituiertem Aryloxy, gegebenenfalls substituiertem Alkyl, gegebenenfalls substituiertem Aryl, gegebenenfalls substituiertem Heterocyclyl, gegebenenfalls substituiertem Arylalkyl, gegebenenfalls substituiertem Alkylthio, gegebenenfalls substituiertem Arylalkylthio, Dialkoxy- oder Diaryloxyphosphinyl [-P(=O)OR⁴₂], Dialkyl- oder Diarylphosphinyl [-P(=O)R⁴₂], wobei R⁴ ausgewählt ist aus der Gruppe bestehend aus gegebenenfalls substituiertem C₁-C₁₈-Alkyl, gegebenenfalls substituiertem C₂-C₁₈-Alkenyl, gegebenenfalls substituiertem Aryl, gegebenen falls substituiertem Heterocyclyl, gegebenenfalls substituiertem Arylalkyl, gegebenen falls substituiertem Alkaryl, gegebenen falls substituiertem Acylamino, gegebenenfalls substituiertem Acylimino, gegebenenfalls substituiertem Amino, einer durch einen beliebigen Mechanismus gebildeten Polymerkette; und wobei H jeweils unabhängig für einen polymerisierten Rest eines ethylenisch ungesättigten Monomers steht und n für eine ganze Zahl von 1 bis 300 steht.

6. Verfahren nach Anspruch 5, bei dem -(H)ₙ- Wiederholungseinheiten umfasst, die sich von mindestens einem ethylenisch ungesättigten Monomer mit hydrophilem Charakter (h1) und von mindestens einem ethylenisch ungesättigten Monomer mit hydrophobem Charakter (h2) ableiten.

7. Verfahren nach Anspruch 6, bei dem das mindestens eine ethylenisch ungesättigte Monomer mit hydrophilem Charakter (h1) funktionelle Gruppen enthält, deren korrespondierende Säure eine Säuredissoziationskonstante pKa von weniger als 6 aufweist.

8. Verfahren nach einem der Ansprüche 5 bis 7, bei dem Rₐ ausgewählt ist aus der Gruppe bestehend aus: -CH(CH₃)CO₂H, -CH(CO₂H)CH₂CO₂H,-C(CH₃)₂CO₂H, -CH₂(C₆H₅), -C(CN)(CH₃)CO₂H, -C(CN)(CH₃)(CH₂)₂CO₂H und Z ausgewählt ist aus der Gruppe bestehend aus: -SCH₂(C₆H₅),-S(CH₂)ᵤCO₂H, wobei u für eine ganze Zahl von 2 bis 11 steht, -SC_{z}H_{2z+1},-OC_{z}H_{2z+1}, wobei z für eine ganze Zahl von 1 bis 12, vorzugsweise von 2 bis 12, steht, -SCH₂CH₂OH, -OCH₂CF₃, -N(C₆H₅)(CH₃).

9. Vinylidenchloridpolymer-Verbundwerkstoff, umfassend einen Ton, der in einem durch das Verfahren nach einem der Ansprüche 1 bis 8 erhältlichen Vinylidenchloridpolymer verkapselt ist.

10. Vinylidenchloridpolymer-Verbundwerkstoff nach Anspruch 9, wobei der Gehalt des Tonmaterials mindestens 0,05 Gew.-% und höchstens 50 Gew.-%, bezogen auf das Gesamtgewicht des Verbundwerkstoffs, beträgt.

11. Vinylidenchloridpolymer-Verbundwerkstoff nach Anspruch 9 oder 10, wobei das Vinylidenchloridpolymer mindestens 50 Gew.-% Wiederholungseinheiten, die sich von Vinylidenchlorid ableiten, und höchstens 50 Gew.-% Wiederholungseinheiten, die sich von einem oder mehreren ethylenisch ungesättigten Monomeren aus der Gruppe bestehend aus Methylacrylat, Methylmethacrylat, Ethylacrylat, Ethylmethacrylat, n-Butylacrylat, n-Butylmethacrylat, 2-Ethylhexylacrylat, 2-Ethylhexylmethacrylat, 2-Hydroxyethylacrylat, 2-Hydroxyethylmethacrylat, Glycidylmethacrylat, Glycidylacrylat, Acrylnitril, Methacrylnitril, Acrylsäure, Methacrylsäure, Acrylamid, N-Methylolacrylamid, N,N-Di(alkyl)acrylamid, Poly(ethylenoxid)methyletheracrylat (PEOAA), Poly(ethylenoxid)methylethermethacrylat (PEOMA) ableiten, umfasst.

12. Zusammensetzung, umfassend den Vinylidenchloridpolymer-Verbundwerkstoff nach einem der Ansprüche 9 bis 11 und ein Polymer oder eine flüssige Phase.

13. Verwendung des Vinylidenchloridpolymer-Verbundwerkstoffs nach einem der Ansprüche 9 bis 11 oder einer Zusammensetzung nach Anspruch 12 zur Herstellung von Folien.

14. Verwendung des Vinylidenchloridpolymer-Verbundwerkstoffs nach einem der Ansprüche 9 bis 11 oder einer Zusammensetzung nach Anspruch 12 zur Herstellung eines Überzugs.

15. Artikel, umfassend den Vinylidenchloridpolymer-Verbundwerkstoff nach einem der Ansprüche 9 bis 11 oder eine Zusammensetzung nach Anspruch 12.

## Revendications

1. Procédé pour la préparation d'un composite de polymère de chlorure de vinylidène comprenant :
- l'obtention d'une dispersion d'une matière argileuse dans une phase liquide, ladite dispersion comprenant un agent de RAFT/MADIX choisi dans le groupe constitué par :
(i) les agents de RAFT/MADIX de formule générale (II) : 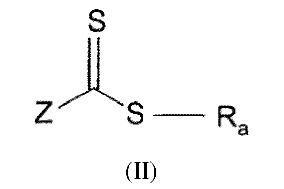 dans lesquels Rₐ est un groupe organique éventuellement substitué par un ou plusieurs groupes hydrophiles et Z est n'importe quel groupe qui peut favoriser une réactivité suffisante du groupe thiocarbonyle vis-à-vis d'une addition radicalaire ; et
(ii) les agents de RAFT/MADIX de formule générale (III) : 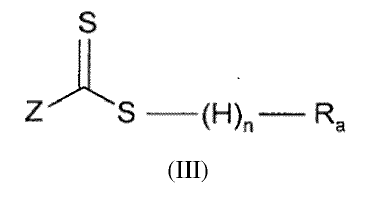 dans lesquels Z et Rₐ sont tels que définis ci-dessus ; et dans lesquels chaque H est indépendamment un résidu polymérisé d'un monomère à insaturation éthylénique et n est un nombre entier de 1 à 200 ;
- l'ajout de chlorure de vinylidène et éventuellement d'au moins un monomère à insaturation éthylénique copolymérisable avec celui-ci à ladite dispersion ; et
- la polymérisation du chlorure de vinylidène et éventuellement dudit au moins un monomère à insaturation éthylénique sous le contrôle dudit agent de RAFT/MADIX pour former un polymère de chlorure de vinylidène comprenant au moins 50 % en poids de motifs récurrents issus de chlorure de vinylidène à la surface de ladite matière argileuse.

2. Procédé selon la revendication 1 dans lequel la matière argileuse est choisie dans le groupe constitué par la montmorillonite, l'hectorite naturelle et synthétique, la laponite, la saponite, le mica, la vermiculite, la nontronite, la beidellite, la volkonskoïte, la kaolinite, la serpentinite, la saponite naturelle et synthétique, la gibbsite, la montmorillonite fluorée et le mica fluoré.

3. Procédé selon l'une quelconque des revendications précédentes dans lequel la matière argileuse est la gibbsite.

4. Procédé selon l'une quelconque des revendications précédentes dans lequel la phase liquide est l'eau.

5. Procédé selon l'une quelconque des revendications précédentes dans lequel l'agent de RAFT/MADIX répond à la formule (III) : 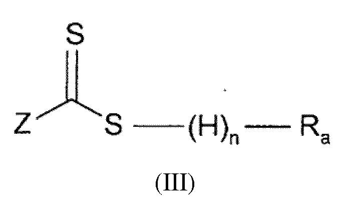 dans lequel
Rₐ est choisi parmi les groupes alkyle en C₁-C₆, alcoxy en C₁-C₆, aryle ou hétéroaryle, chacun de ceux-ci pouvant être substitué par un ou plusieurs groupes hydrophiles choisis parmi -CO₂H, -CO₂R, -CN, -SO₃H, -OSO₃H,-SOR, -SO₂R, -OP(OH)₂, -P(OH)₂, -PO(OH)₂, -OH, -OR, -(OCH₂-CHR)_{w}-OH, -(OCH₂-CHR)_{w}-OR, -CONH₂, CONHR¹, CONR¹R², -NR¹R²,-NR¹R²R³, R étant choisi parmi les groupes alkyle en C₁-C₆, w valant 1 à 10, R¹, R² et R³ étant indépendamment choisis parmi les groupes alkyle en C₁-C₆ et aryle qui sont éventuellement substitués par un ou plusieurs substituants hydrophiles choisis parmi -CO₂H, -SO₃H, -OSO₃H, -OH,-(COCH₂CHR)_{w}-OH, -CONH₂, -SOR et SO₂R, et les sels de ceux-ci, R et w étant tels que définis ;
Z est choisi parmi les groupes alcoxy éventuellement substitué, aryloxy éventuellement substitué, alkyle éventuellement substitué, aryle éventuellement substitué, hétérocyclyle éventuellement substitué, arylalkyle éventuellement substitué, alkylthio éventuellement substitué, arylalkylthio éventuellement substitué, dialcoxyphosphinyle ou diaryloxyphosphinyle [-P(=O)OR⁴₂], dialkylphosphinyle ou diarylphosphinyle [-P(=O)R⁴₂], R⁴ étant choisi dans le groupe constitué par les groupes alkyle en C₁-C₁₈ éventuellement substitué, alcényle en C₂-C₁₈ éventuellement substitué, aryle éventuellement substitué, hétérocyclyle éventuellement substitué, arylalkyle éventuellement substitué, alkaryle éventuellement substitué, acylamino éventuellement substitué, acylimino éventuellement substitué, amino éventuellement substitué ou une chaîne polymère formée par n'importe quel mécanisme ; et
chaque H est indépendamment un résidu polymérisé d'un monomère à insaturation éthylénique et n est un nombre entier de 1 à 300.

6. Procédé selon la revendication 5 dans lequel -(H)ₙ-comprend des motifs récurrents issus d'au moins un monomère à insaturation éthylénique ayant un caractère hydrophile (h1) et d'au moins un monomère à insaturation éthylénique ayant un caractère hydrophobe (h2).

7. Procédé selon la revendication 6 dans lequel l'au moins un monomère à insaturation éthylénique ayant un caractère hydrophile (h1) contient des groupes fonctionnels dont l'acide correspondant a une constante de dissociation d'acide pKa inférieure à 6.

8. Procédé selon l'une quelconque des revendications 5 à 7 dans lequel
Rₐ est choisi dans le groupe constitué par : -CH(CH₃)CO₂H,-CH(CO₂H)CH₂CO₂H, -C(CH₃)₂CO₂H, -CH₂(C₆H₅), -C(CN)(CH₃)CO₂H, -C(CN)(CH₃)(CH₂)₂CO₂H et
Z est choisi dans le groupe constitué par : -SCH₂(C₆H₅), -S(CH₂)ᵤCO₂H, u étant un nombre entier de 2 à 11, -SC_{z}H_{2z+1}, -OC_{z}H_{2z+1}, z étant un nombre entier de 1 à 12, de préférence de 2 à 12, -SCH₂CH₂OH, -OCH₂CF₃,-N(C₆H₅)(CH₃).

9. Composite de polymère de chlorure de vinylidène comprenant une argile encapsulée dans un polymère de chlorure de vinylidène pouvant être obtenu par le procédé selon l'une quelconque des revendications 1 à 8.

10. Composite de polymère de chlorure de vinylidène selon la revendication 9 dans lequel la teneur de la matière argileuse est d'au moins 0,05 % en poids et d'au maximum 50 % en poids par rapport au poids total du composite.

11. Composite de polymère de chlorure de vinylidène selon la revendication 9 ou 10 dans lequel le polymère de chlorure de vinylidène comprend au moins 50 % en poid vinylidène et au maximum 50 % en poids de motifs récurrents issus d'un ou plusieurs monomères à insaturation éthylénique choisis dans le groupe constitué par l'acrylate de méthyle, le méthacrylate de méthyle, l'acrylate d'éthyle, le méthacrylate d'éthyle, l'acrylate de *n*-butyle, le méthacrylate de *n*-butyle, l'acrylate de 2-éthylhexyle, le méthacrylate de 2-éthylhexyle, l'acrylate de 2-hydroxyéthyle, le méthacrylate de 2-hydroxyéthyle, le méthacrylate de glycidyle, l'acrylate de glycidyle, l'acrylonitrile, le méthacrylonitrile, l'acide acrylique, l'acide méthacrylique, l'acrylamide, le *N-*méthylolacrylamide, le *N,N*-di(alkyl)acrylamide, l'acrylate d'éther méthylique de poly(oxyde d'éthylène) (PEOAA) et le méthacrylate d'éther méthylique de poly(oxyde d'éthylène) (PEOMA).

12. Composition comprenant le composite de polymère de chlorure de vinylidène selon l'une quelconque des revendications 9 à 11 et un polymère ou une phase liquide.

13. Utilisation du composite de polymère de chlorure de vinylidène selon l'une quelconque des revendications 9 à 11 ou d'une composition selon la revendication 12 pour la préparation de films.

14. Utilisation d'un composite de polymère de chlorure de vinylidène selon l'une quelconque des revendications 9 à 11 ou d'une composition selon la revendication 12 pour la préparation d'un revêtement.

15. Article comprenant le composite de polymère de chlorure de vinylidène selon l'une quelconque des revendications 9 à 11 ou une composition selon la revendication 12.
